# EUROPÄISCHE PATENTSCHRIFT

(11) **EP 1 862 331 B1**
(45) Veröffentlichungstag und Bekanntmachung des Hinweises auf die Patenterteilung: **24.02.2010**
(21) Anmeldenummer: 07010918.6
(22) Anmeldetag: 01.06.2007
(51) Int. Cl.: B60B 3/14, B60B 3/16, F16B 37/14

(54) **Radbefestigungssystem für verschiedene Radlagereinheiten**
Wheel mounting system for different wheel bearing units
Système de fixation de roues pour diverses unités de paliers de roues

(30) Priorität: 03.06.2006 DE 102006026119
(43) Veröffentlichungstag der Anmeldung: 05.12.2007
(73) Patentinhaber: GM Global Technology Operations, Inc., Detroit, MI 48265-3000 (US)
(72) Erfinder: Gigla, Joachim, 55296 Lörzweiler (DE); Konter, Andre-Alexander, 67575 Eich (DE); Schmidt, Mathias, 65201 Wiesbaden (DE)
(74) Vertreter: Daniel, Ulrich W.P.

(56) Entgegenhaltungen:
- EP-A- 1 619 045
- DE-A1- 19 913 024
- US-A- 4 165 904
- US-B1- 6 261 039

## Beschreibung

Die vorliegende Erfindung betrifft ein Radbefestigungssystem zur Befestigung von Rädern an einem Kraftfahrzeug gemäß dem Oberbegriff des Anspruchs 1.

Kraftfahrzeuge weisen auswechselbar montierte Räder zur Fortbewegung auf. Die Räder weisen dabei in der Regel eine Radschüssel auf, über welche das Rad mit dem Kraftfahrzeug verbunden wird.

Bekannt ist, die Radschüssel des Rades mit einer Radlagereinheit zu verbinden. Die Radlagereinheit weist dabei Stehbolzen auf, welche durch entsprechende Durchgangsöffnungen die Radschüssel durchdringen und der aus den Durchgangsöffnungen jeweils herausragende Teil wird mittels eines passenden Gegenstücks gesichert, so dass die Radschüssel an der Radlagereinheit fest montiert ist. In der Regel werden die Radschüssel mittels Radmuttern, welche auf die Stehbolzen aufgesetzt werden, mit der Radlagereinheit verbunden.

Für unterschiedliche Kraftfahrzeuge werden in Abhängigkeit von dem zu übertragenden Moment unterschiedlich dimensionierte Radlagereinheiten verwendet. Dabei werden bei größeren zu übertragenden Drehmomenten bzw. bei höheren Fahrzeuggewichten größer dimensionierte Radlagereinheiten verwendet, bei denen die Stehbolzen auf einem größeren Loch- oder Teilkreisdurchmesser angeordnet sind, als bei einem Kraftfahrzeug, welches ein geringeres Drehmoment zu übertragen hat bzw. leichter ist. Die Stehbolzen sind entsprechend der Größe des zu übertragenden Drehmoments / der zu übertragenden Kräfte unterschiedlich dimensioniert, das heißt, bei größeren zu übertragenden Drehmomenten / Kräften ist der Durchmesser der Stehbolzen dicker bemessen.

Entsprechend der unterschiedlichen Dimensionierung der Radlagereinheit müssen entsprechend angepasste Räder vorgesehen werden. Diese mehrfache Bereitstellung von Rädern wird auch als Proliferation bezeichnet.

Ferner ist aus der gattungsgemäßen EP 1 619 045 A2 ein Radbolzen zur Befestigung eines Fahrzeugrades bekannt, bestehend aus einem radial erweiterten Kopf und einem sich anschließenden, zugleich einen Bremskörper, den Radträger und das Fahrzeugrad durchdringenden Schaft, der einen Gewindeabschnitt und einen mit mindestens einer Wendelnut versehenen Zentrierabschnitt umfasst.

Die DE 199 13 024 A1 offenbart eine Radlagerung für Fahrzeugachsen, welche aus einer auf dem Achsschenkel der Wälzlager drehbar gelagerten Nabe besteht, die durch auf ein freies Ende des Achsschenkels aufgeschraubte Achsmutter gehalten ist.

Die US 6,261,039 B1 betrifft einen Gewindereparatureinsatz und dient dazu, ein durch einen Materialriss beschädigtes und somit gerissenes Gewinde zu reparieren. Hierfür wird der Reparatureinsatz so weit in ein beschädigtes Schraubenloch mit einer mit einem Außengewinde versehenen eingeschraubt, bis sich eine Anlageschulter seitlich des Lochs abstützt. Bei Beaufschlagung eines weiteren Schraub- oder Drehmoments bricht dann eine Sollbruchstelle und der Schraubenkopf löst sich von der in das Loch eingeschraubten Hülse. Die Hülse weist ferner ein Innen gewinde (114) auf, welches zur Aufnahme eines Schraubbolzens mit einem im geringeren Außengewindedurchmesser ausgebildet ist.

Ferner ist aus der US 4,165,904 ein Adapterbolzen zur Befestigung eines Fahrzeugrads an Stehbolzen einer Rads bekannt, wobei der Adapterbolzen ein gegenüber einem Außengewinde exzentrisch angeordnetes Innengewinde aufweist. Hierbei sind ferner reibungserhöhende Mittel vorgesehen, um den Adapterbolzen in verschiedenen Ausrichtungen zur Bildung unterschiedlicher Außendurchmesser eines von mehreren Bolzen gebildeten Kreises zu fixieren.

Somit ist es ein Nachteil des Stand der Technik, dass bei veränderten Radlagereinheiten für unterschiedliche, zu übertragende Drehmomente / Kräfte eine Proliferation vorgesehen werden muss, das heißt ein neuer Satz Räder bereitgestellt werden muss, was zu einem hohen Aufwand und nicht zuletzt hohen Kosten führt.

Eine Aufgabe der vorliegenden Erfindung ist es deshalb, eine Radbefestigung zu schaffen, bei der für unterschiedliche Kraftfahrzeuge mit unterschiedlichen Drehmomenten /Gewichten ein Rad mit unverändertem Radschüssel bei veränderten Radlagereinheiten verwendbar ist.

Diese Aufgabe wird durch Anspruch 1 gelöst.

Die technische Lehre sieht vor, dass ein Radbefestigungssystem zur Befestigung von Rädern, welche auf einem konstanten Lochkreisdurchmesser Durchgangsöffnungen mit konstant festgelegten Durchgangsöffnungsdurchmessern aufweist, an einem Kraftfahrzeug vorgesehen ist, umfassend: Radlagereinheiten mit stets auf dem gleichen Lochkreisdurchmesser angeordneten, vorspringenden Elementen zum Durchdringen der Durchgangsöffnungen der Radschüssel in einem montierten Zustand, wobei die vorspringenden Elemente je nach Radlagereinheit unterschiedliche Außenabmessungen aufweisen, und Sicherungselemente mit Durchgangsöffnungen, welche mit den aus den Durchgangsöffnungen herausragenden Teilen der vorspringenden Elemente, diese mit den Durchgangsöffnungen radial umgebend zusammenwirken, um das Rad auf den vorspringenden Teilen zumindest gegen axialen und/oder radialen Versatz zu sichern, wobei die Sicherungselemente Mittel zum Ausgleich der unterschiedlichen Außenabmessungen der vorspringenden Elemente aufweisen, um bei einer konstanten Außenabmessung ein Zusammenwirken mit den unterschiedliche Außenabmessungen aufweisenden, vorspringenden Elementen zu gewährleisten.

Dadurch, dass die vorspringenden Elemente, die bevorzugt als mit einem Gewinde versehene Stehbolzen ausgebildet sind, stets auf einem konstanten Lochkreisdurchmesser angeordnet sind, kann stets die gleiche Felge mit dem gleichen Lochkreisdurchmesser verwendet werden. Lediglich die äußeren Abmaße der vorspringenden Elemente sind veränderbar entsprechend des zu übertragenden Drehmoments bzw. Fahrzeuggewichtes ausgebildet, so dass die vorspringenden Elemente und die Durchgangsöffnungen auf einem gemeinsamen Lochkreisdurchmesser angeordnet sind. Um das Rad auf unterschiedlichen vorspringenden Elementen zu sichern, müssen unterschiedliche, mit den vorspringenden Elementen zusammenwirkende Sicherungselemente vorgesehen werden. Die Sicherungselemente werden mit einem am Umfang der Sicherungselemente ansetzenden Werkzeug auf den vorspringenden Elementen angezogen. Um nur ein Werkzeug für alle vorspringenden Elemente und alle Sicherungselemente verwenden zu müssen, muss die Außenkontur der Sicherungselemente gleich ausgebildet sein. Bevorzugt sind die Sicherungselemente als Muttern ausgebildet. Somit muss die Schlüsselweite der Muttern stets die gleiche bleiben, um nicht unnötig viele Montagewerkzeuge zu benötigen. Um das zu gewährleisten, muss die Mutter entsprechende Mittel aufweisen, um auf die vorspringenden Elemente mit unterschiedlichen Durchmessern zu passen. Durch die Mittel lassen sich alle Muttern an die unterschiedlichen Durchmesser der vorspringenden Elemente anpassen.

Bevorzugt ist, dass die Mittel als an die Außenabmessung der vorspringenden Elemente ausgebildeter Innenaufsatz für das Sicherungselement ausgebildet sind, welches in der Durchgangsöffnung angeordnet ist. Durch einfaches Anordnen des Innenaufsatzes innerhalb der Durchgangsöffnung der Mutter lässt sich die Mutter für hinsichtlich ihres äußeren Umfangs verschieden bemessene vorspringende Elemente verwenden. Der Innenaufsatz weist dabei ein Innengewinde auf, welches zu dem Gewinde der vorspringenden Elemente korrespondiert. Der Innenaufsatz kann ein Außengewinde aufweisen, welches zu dem Gewinde der Mutter bzw. des Sicherungselements korrespondiert. Gegebenenfalls ist der Innenaufsatz an dem Sicherungselement gegen ungewolltes Bewegen zu sichern. Hierzu kann der Innenaufsatz beispielsweise in der Durchgangsöffnung des Sicherungselements festgeklebt, festgeschraubt, festgeklemmt oder anders befestigt sein.

Bevorzugt ist es, dass die vorspringenden Elemente ein Außengewinde aufweisen und der Innenaufsatz ein zum dem Außengewinde korrespondierendes Innengewinde aufweist, um ein Zusammenwirken von vorspringenden Elementen und Sicherungselement zu bewirken.

Neben einer mehrteiligen Ausbildung von Sicherungselement und Innenaufsatz ist es bevorzugt, dass der Aufsatz einteilig mit dem Sicherungselement ausgebildet ist. Hierbei werden keine weiteren Befestigungselemente benötigt.

Bevorzugt ist es weiter, dass das Sicherungselement als eine Sicherungsmutter mit einer für die verschiedenen vorspringenden Elemente konstant ausgebildeten Außenabmessung ausgebildet ist. Die Sicherungsmutter ist ein gängiges Normteil, welches bereits weite Verwendung bei der Radbefestigung findet. Die Sicherungsmutter ist zudem einfach zu bedienen und einfach herzustellen.

Bevorzugt ist weiter, dass die vorspringenden Elemente als Stehbolzen mit einem Außengewinde ausgebildet sind, welches ausgewählt ist aus der Gruppe der Gewinde umfassend: M12, M14. Gängige Typen an Gewinden sind M12 und M14, insbesondere bei der Radbefestigung. Aus diesem Grund ist es sinnvoll, die verwendeten Gewinde als M12 und/oder M14 auszubilden, da somit die wenigsten Umstellungen zu erfolgen haben.

Bevorzugt ist auch, dass zwischen den Radlagereinheiten und der Radschüssel eine Bremsscheibe mit Durchgangsöffnungen angeordnet ist, wobei die Durchgangsöffnungen der Bremsscheibe im montierten Zustand von den vorspringenden Elementen durchdrungen werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: schematisch eine perspektivische Darstellung einer Radbefestigung in einer Explosionsansicht;
- Fig. 2: schematisch einen Querschnitt durch einen Teil der Radbefestigung; und
- Fig. 3: schematisch einen Querschnitt durch einen Teil der Radbefestigung aus Fig. 2 vergrößert dargestellt.

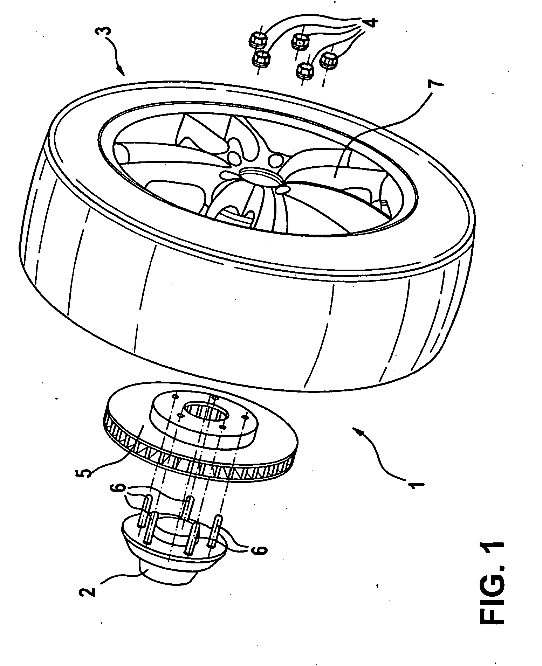

Fig. 1 zeigt schematisch eine perspektivische Darstellung einer Radbefestigung 1 in einer Explosionsansicht. Die Radbefestigung 1 umfasst eine Radlagereinheit 2, ein Rad 3, Sicherungselemente 4 und eine Bremsscheibe 5. Die Radlagereinheit 2 weist vorspringende Elemente 6 auf, welche als Stehbolzen ausgebildet sind. Diese Stehbolzen weisen ein Gewinde auf.

Das Rad 3 umfasst eine Radschüssel 7, über welche das Rad mit dem Kraftfahrzeug, genauer mit der Radlagereinheit 2 befestigt wird. Die Radschüssel 7 weist hierzu Durchgangsöffnungen auf, welche im eingebauten Zustand von den vorspringenden Elementen 6 durchdrungen werden und die ein Stück aus der Durchgangsöffnung hervorragen. Um das Rad 3 an der Radlagereinheit 2 zu sichern, sind Sicherungselemente 4 vorgesehen. Diese Sicherungselemente 4 sind als Muttern ausgebildet, welche ein Innengewinde aufweisen. Die Muttern sind ausgebildet, um auf die vorspringenden Elemente mit dem größten Durchmesser zu passen und mit diesem zusammenzuwirken.

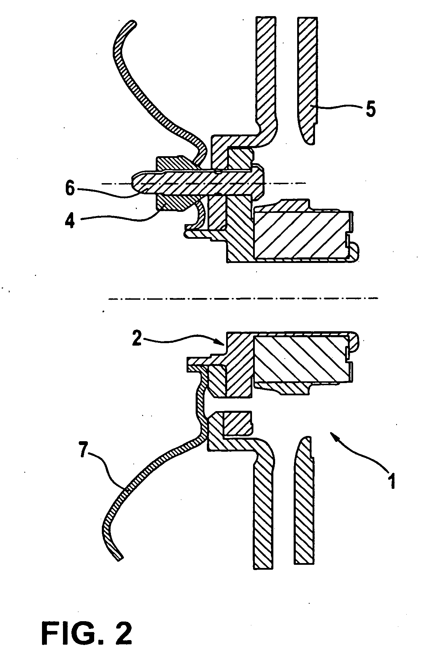

Zwischen Radlagereinheit 2 und Rad 4 ist eine Bremsscheibe 5 vorgesehen, welche ebenfalls Durchgangsöffnungen aufweist. Die Bremsscheibe 5 ist im eingebauten Zustand sandwichartig zwischen Rad 4 und Radlagereinheit 2 angeordnet. In Fig. 2 ist eine Querschnittansicht eines Teils der Radbefestigung in zusammengebauten Zustand dargestellt.

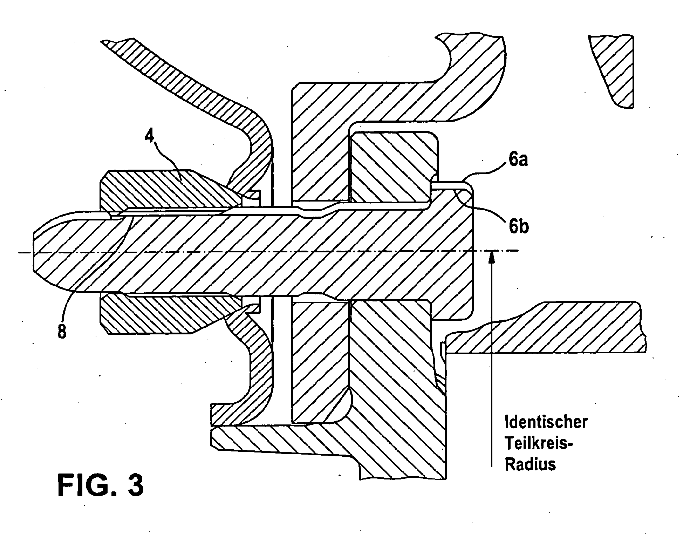

Fig. 2 zeigt schematisch einen Querschnitt durch einen Teil der Radbefestigung 1. Die Radbefestigung 1 umfasst wie schon in Fig. 1 die Radlagereinheit 2, die Sicherungselemente 4, das Rad (nicht dargestellt) und die Bremsscheibe 5. Das Rad ist über die Radschüssel 7 mit der Radlagereinheit 2 befestigt. Genauer ist die Radschüssel 7 über deren Durchgangsöffnungen mit den vorspringenden Elementen 6 der Radlagereinheit 2 verbunden. Gesichert ist die Radschüssel 7 auf den vorspringenden Elementen 6 mittels eines als Mutter ausgebildeten Sicherungselements 4. In Fig. 3 ist ein Ausschnitt um ein vorspringendes Element im Querschnitt größer dargestellt.

Fig. 3 zeigt schematisch einen Querschnitt durch einen Teil der Radbefestigung aus Fig. 2 vergrößert dargestellt. Zur Gegenüberstellung ist einmal eine Radbefestigung mit einem als Stehbolzen ausgebildeten ersten vorspringenden Element 6a und einmal mit einem zweiten vorspringenden Element 6b dargestellt. Das erste vorspringende Element 6a weist einen größeren Durchmesser auf und ist vorliegend als M14-Stehbolzen ausgebildet. Das zweite vorspringende Element 6b weist einen kleineren Durchmesser auf und ist vorliegend als M12-Stehbolzen ausgebildet. Korrespondierend dazu ist ein als Mutter ausgebildetes Sicherungselement 4 vorgesehen. Um bei gleicher Au-βengeometrie auch als Sicherungselement 4 für den M12-Stehbolzen verwendet werden zu können, weist die Mutter einen Innenaufsatz 8 auf. Der Innenaufsatz weist ein zu dem M12-Stehbolzen korrespondierendes M12 Innengewinde auf. Angedeutet ist zudem der Teilkreisradius, auf welchem sowohl der M12-Stehbolzen als auch der M14-Stehbolzen ausgebildet ist.

### Bezugszeichenliste

- **1**: Radbefestigungssystem
- **2**: Radlagereinheit
- **3**: Rad
- **4**: Sicherungselement
- **5**: Bremsscheibe
- **6**: vorspringendes Element
- **7**: Radschüssel
- **8**: Innenaufsatz

## Patentansprüche

1. Radbefestigungssystem (1) zur Befestigung von Rädern (3), welche auf einem konstanten Lochkreisdurchmesser Durchgangsöffnungen mit konstant festgelegten Durchgangsöffnungsdurchmessern aufweisen, an einem Kraftfahrzeug, umfassend:
Radlagereinheiten (2) mit stets auf dem gleichen Lochkreisdurchmesser angeordneten, vorspringenden Elementen (6) zum Durchdringen der Durchgangsöffnungen der Radschüssel (7) in einem montierten Zustand, wobei die vorspringenden Elemente (6) je nach Radlagereinheit (2) unterschiedliche Außenabmessungen aufweisen, und
Sicherungselemente (4) mit Durchgangsöffnungen, welche mit den aus den Durchgangsöffnungen herausragenden Teilen der vorspringenden Elemente (6), diese mit den Durchgangsöffnungen radial umgebend zusammenwirken, um eine Felge (7) auf den vorspringenden Teilen (6) zumindest gegen axialen und/oder radialen Versatz zu sichern, **dadurch gekennzeichnet, dass** die Sicherungselemente (4) Mittel zum Ausgleich der unterschiedlichen
Außenabmessungen der vorspringenden Elemente (6) aufweisen, um bei einer konstanten Außenabmessung ein Zusammenwirken mit den unterschiedliche Außenabmessungen aufweisenden, vorspringenden Elementen (6) zu gewährleisten.

2. Radbefestigungssystem (1) nach Anspruch 1, **dadurch gekennzeichnet, dass**
die Mittel als an die Außenabmessung der vorspringenden Elemente (6) ausgebildeter Innenaufsatz (8) für das Sicherungselement (4) ausgebildet sind, welches in der Durchgangsöffnung angeordnet ist.

3. Radbefestigungssystem (1) nach einem der Ansprüche 1 oder 2, **dadurch gekennzeichnet, dass**
die vorspringenden Elemente (6) ein Außengewinde aufweisen und der Innenaufsatz (8) ein zum dem Außengewinde korrespondierendes Innengewinde aufweist, um ein Zusammenwirken von vorspringenden Elementen (6) und Sicherungselementen (4) zu bewirken.

4. Radbefestigungssystem (1) nach einem der vorherigen Ansprüche 1 bis 3, **dadurch gekennzeichnet, dass**
der Innenaufsatz (8) einteilig mit dem Sicherungselement (4) ausgebildet ist.

5. Radbefestigungssystem (1) nach einem der vorherigen Ansprüche 1 bis 4, **dadurch gekennzeichnet, dass**
das Sicherungselement (4) als eine Sicherungsmutter mit einer für die verschiedenen vorspringenden Elemente (6) konstant ausgebildeten Außenabmessung ausgebildet ist.

6. Radbefestigungssystem (1) nach einem der vorherigen Ansprüche 1 bis 5, **dadurch gekennzeichnet, dass**
die vorspringenden Elemente (6) als Stehbolzen mit einem Außengewinde ausgebildet sind, welches ausgewählt ist aus der Gruppe der Gewinde umfassend: M12, M14.

7. Radbefestigungssystem (1) nach einem der vorherigen Ansprüche 1 bis 6, **dadurch gekennzeichnet, dass**
zwischen den Radlagereinheiten (2) und den Radschüsseln (7) eine Bremsscheibe (5) mit Durchgangsöffnungen angeordnet ist, wobei die Durchgangsöffnungen der Bremsscheibe (5) im montierten Zustand von den vorspringenden Elementen (6) durchdrungen werden.

## Claims

1. A wheel mounting system (1) for mounting wheels (3) which comprise through holes on a constant pitch circle diameter which have through-hole diameters which are fixed to be constant, on a motor vehicle, comprising:
wheel bearing units (2) with protruding elements (6) which are always arranged on the same pitch circle diameter for penetrating the through holes of the wheel disk (7) in a mounted state, with the protruding elements (6) having different outside dimensions depending on the wheel bearing unit (2), and securing elements (4) with through holes which cooperate with the parts of the protruding elements (6) which protrude from the through holes and enclose the same radially with the through holes in order to secure a wheel rim (7) on the protruding parts (6) against axial and/or radial offset, **characterized in that** the securing elements (4) comprise means for compensating the different outside diameters of the protruding elements (6) in order to ensure, at a constant outside diameter, a cooperation with the protruding elements (6) which have different outside diameters.

2. A wheel mounting system (1) according to claim 1, **characterized in that** the means are arranged as an inside cap (8) for the securing element (4) which is arranged to the outside diameter of the protruding elements (6), which securing element is arranged in the through hole.

3. A wheel mounting system (1) according to one of the claims 1 or 2, **characterized in that** the protruding elements (6) have an external thread and the inside cap (8) has an internal thread which corresponds to the external thread in order to produce a cooperation of the protruding elements (6) and securing elements (4).

4. A wheel mounting system (1) according to one of the preceding claims 1 to 3, **characterized in that** the inside cap (8) is arranged to be integral with the securing element (4).

5. A wheel mounting system (1) according to one of the preceding claims 1 to 4, **characterized in that** the securing element (4) is arranged as a locking nut with an outside dimension which is arranged to be constant for the different protruding elements (6).

6. A wheel mounting system (1) according to one of the preceding claims 1 to 5, **characterized in that** the protruding elements (6) are arranged as stud bolts with an external thread which is chosen from the group of threads comprising: M12, M14.

7. A wheel mounting system (1) according to one of the preceding claims 1 to 6, **characterized in that** a brake disk (5) with through openings is arranged between the wheel bearing units (2) and the wheel disks, with the through holes of the brake disk (5) being penetrated in the mounted state by the protruding elements (6).

## Revendications

1. Système de fixation de roues (1) pour la fixation sur un véhicule de roues (3) qui présentent sur un diamètre de cercle de perforations constant des ouvertures de passage d'un diamètre d'ouverture de passage défini et constant, comprenant : des unités de palier de roue (2) avec des éléments en saillie (6) toujours disposés sur le même diamètre de cercle de perforations destinés à pénétrer dans les ouvertures de passage de la cuvette de roue (7) dans un état monté, les éléments en saillie (6) présentant des dimensions extérieures différentes selon l'unité de palier de roue (2), et des éléments de fixation (4) avec des ouvertures de passage qui coopèrent avec les parties des éléments en saillie (6) dépassant des ouvertures de passage en entourant ceux-ci dans le sens radial avec les ouvertures de passage, pour fixer une jante (7) sur les éléments en saillie (6) afin d'empêcher au moins son décalage axial et/ou radial, **caractérisé en ce que** les éléments de fixation (4) comprennent des moyens pour compenser les dimensions extérieures différentes des éléments en saillie (6) afin de garantir, avec une dimension extérieure constante, une interaction avec des éléments en saillie (6) présentant des dimensions extérieures différentes.

2. Système de fixation de roues (1) selon la revendication 1, **caractérisé en ce que** les moyens sont conçus comme un épaulement intérieur (8) formé sur la dimension extérieure des éléments en saillie (6) pour l'élément de fixation (4), qui est disposé dans l'ouverture de passage.

3. Système de fixation de roues (1) selon l'une des revendications 1 ou 2, **caractérisé en ce que** les éléments en saillie (6) présentent un filetage extérieur et l'épaulement intérieur (8) présente un filetage intérieur correspondant au filetage extérieur, afin de réaliser une coopération des éléments en saillie (6) et des éléments de fixation (4).

4. Système de fixation de roues (1) selon l'une des revendications 1 à 3, **caractérisé en ce que** l'épaulement intérieur (8) est formé d'un seul tenant avec l'élément de fixation (4).

5. Système de fixation de roues (1) selon l'une des revendications 1 à 4, **caractérisé en ce que** l'élément de fixation (4) est conformé comme un écrou de fixation pour une dimension extérieure constante pour les différentes éléments en saillie (6).

6. Système de fixation de roues (1) selon l'une des revendications 1 à 5, **caractérisé en ce que** les éléments en saillie (6) sont conformés comme des boulons d'entretoisement dont le filetage extérieur est choisi dans le groupe de filetages comprenant M12 et M14.

7. Système de fixation de roues (1) selon l'une des revendications 1 à 6, **caractérisé en ce qu'**il est prévu entre les unités de palier de roue (2) et les cuvettes de roue (7) un disque de frein (5) avec des ouvertures de passage, lesquelles ouvertures de passage du disque de frein (5) sont traversées dans l'état monté par les éléments en saillie (6).
